# EUROPÄISCHE PATENTSCHRIFT

(11) **EP 2 326 962 B1**
(45) Veröffentlichungstag und Bekanntmachung des Hinweises auf die Patenterteilung: **07.11.2018**
(21) Anmeldenummer: 09778611.5
(22) Anmeldetag: 18.09.2009
(51) Int. Cl.: G01J 1/08, F21S 8/00, H02S 50/10, F21Y 115/10

(54) **VORRICHTUNG ZUM PRÜFEN VON SOLARZELLEN**
DEVICE FOR TESTING SOLAR CELLS
DISPOSITIF POUR VÉRIFIER DES PILES SOLAIRES

(30) Priorität: 25.09.2008 DE 102008048834
(43) Veröffentlichungstag der Anmeldung: 01.06.2011
(73) Patentinhaber: Strama-MPS Maschinenbau GmbH & Co. KG, 94315 Straubing (DE); Schulz Systemtechnik GmbH, 82395 Obersöchering (DE)
(72) Erfinder: SAGSTETTER, Josef, 94505 Bernried (DE); SCHULZ, Herbert, 82395 Obersöchering (DE)
(74) Vertreter: Schmidt, Steffen
(86) Internationale Anmeldenummer: PCT/EP2009/006764
(87) Internationale Veröffentlichungsnummer: WO 2010/034434

(56) Entgegenhaltungen:
- EP-A- 1 199 576
- EP-A- 1 771 049
- JP-A- 2004 281 706
- JP-A- 2005 017 106
- US-A- 3 630 627
- US-A1- 2007 029 468
- SALA G ET AL: "IMPROVED SOLAR CELLS TESTING FIXTURES" EUROPEAN SPACE POWER. MADRID, OCT. 2 - 6, 1989; [PROCEEDINGS OF THE EUROPEAN SPACE POWER CONFERENCE], NOORDWIJK, ESA PUBLICATIONS, NL, Bd. 2, 2. Oktober 1989 (1989-10-02), Seiten 843-849, XP000173876
- ILIE C ET AL: "Indoor PV devices testing" 1996 INTERNATIONAL SEMICONDUCTOR CONFERENCE. SINAIA, ROMANIA, OCT. 9 - 12, 1996; [INTERNATIONAL SEMICONDUCTOR CONFERENCE], NEW YORK, IEEE, US, Bd. 2, 9. Oktober 1996 (1996-10-09), Seiten 611-614, XP010200644 ISBN: 978-0-7803-3223-2
- LUKSCHAL W ET AL: "A PULSED SOLAR SIMULATOR FOR ELECTRICAL PERFORMANCE TESTS OF SPACE SOLAR CELLS/ARRAYS" EUROPEAN SPACE POWER. MADRID, OCT. 2 - 6, 1989; [PROCEEDINGS OF THE EUROPEAN SPACE POWER CONFERENCE], NOORDWIJK, ESA PUBLICATIONS, NL, Bd. 2, 2. Oktober 1989 (1989-10-02), Seiten 689-693, XP000173852

## Beschreibung

Die vorliegende Erfindung betrifft eine Vorrichtung zum Prüfen von Solarzellen.

Vorrichtungen zum Prüfen von Solarzellen werden im allgemeinen bei der Entwicklung von Solarzellen, beispielsweise zum Bestimmen von Eigenschaften und Kenndaten der Solarzellen, und bei der Herstellung von Solarzellen, beispielsweise zur Qualitätssicherung und Prozessoptimierung, eingesetzt.

Bekannte Vorrichtungen zum Prüfen von Solarzellen umfassen eine Lichtquelle, welche die Solarzellen mit Licht bestrahlt, und eine Messeinheit zum Messen der an den Solarzellen anliegenden Spannung bzw. des durch die Solarzellen fließenden Stroms. Die Lichtquelle gibt Strahlungsenergie an die Solarzellen ab, welche von den Solarzellen in elektrische Energie gewandelt wird.

Bei den Lichtquellen handelt es sich meist um Gasentladungslampen, welchen zur Lichterzeugung eine Gasentladung verwenden. Die eingesetzten Gase umfassen Metalldämpfe oder Gemische aus Halogenen und Metallen. Zur Abgabe von Licht mit einem gewünschten Spektrum weisen die Gasentladungslampen ferner optische Filter auf. Solche Gasentladungslampen werden auch als Dauerlicht-Simulatoren bezeichnet.

Nachteilig bei der Verwendung von Gasentladungslampen ist jedoch, dass sie zusammen mit den optischen Filtern viel Platz benötigen. Durch diesen hohen Platzbedarf bedingt ist auch die Erweiterbarkeit bzw. Flexibilität solcher bekannter Vorrichtungen zum Prüfen von Solarzellen beschränkt. Darüber hinaus ist der Energieverbrauch von Gasentladungslampen relativ hoch. Ferner ist bei einem Dauerbetrieb von Gasentladungslampen mit einer hohen Strahlungsleistung die Lebensdauer der Gasentladungslampen beschränkt.

Es ist auch bekannt, Xenonblitzröhren als Lichtquellen zu verwenden. Bei Xenonblitzröhren erfolgt die Gasentladung nicht kontinuierlich, sondern in Form kurzer Lichtimpulse mit hoher Strahlungsenergie. Dabei wird ein zuvor aufgeladener Energiespeicher in kurzer Zeit entladen. Aufgrund der hohen Strahlungsenergie der Lichtimpulse ist der Energiebedarf von Xenonblitzröhren jedoch sehr hoch. Darüber hinaus benötigen Xenonblitzröhren ebenfalls viel Platz. Auch die Lebensdauer von Xenonblitzröhren ist beschränkt, was eine Verwendung bei Langzeitmessungen an Solarzellen erschwert.

Das Dokument EP 1 199 576 A1 zeigt eine Vorrichtung zum Prüfen von Solarzellen mit einem aus einer Vielzahl von Festkörperlichtquellen bestehenden Beleuchtungsfeld, mit einer Messeinheit zur Messung des durch die Solarzelle fließenden Stroms, sowie mit einer Messvorrichtung, die dazu eingerichtet, eine von dem Beleuchtungsfeld ausgekoppelte Referenzstrahlung zu bestimmen.

Aufgabe der vorliegenden Erfindung ist es, eine Vorrichtung zum Prüfen von Solarzellen bereitzustellen, welche platzsparend ausgebildet ist und bei niedrigem Energiebedarf eine zuverlässige und flexible Prüfung von Solarzellen ermöglicht. Erfindungsgemäß wird diese Aufgabe durch eine Vorrichtung zum Prüfen von Solarzellen gemäß Anspruch 1 gelöst, mit einem Beleuchtungsfeld aufweisend Festkörperbeleuchtungsmittel, welches dazu eingerichtet ist, Strahlung abzugeben, einer Aufnahmevorrichtung, welche dazu eingerichtet ist, mindestens eine Solarzelle derart an einer vorbestimmten Position und/oder in einer vorbestimmten Lage hinsichtlich des Beleuchtungsfelds aufzunehmen, dass das Beleuchtungsfeld die Strahlung zumindest teilweise an die mindestens eine Solarzelle abgibt, Anschlussmitteln, welche dazu eingerichtet sind, einen elektrischen Kontakt mit der mindestens eine Solarzelle herzustellen und einer Messeinheit, welche dazu eingerichtet ist, eine an den Anschlussmitteln anliegende Spannung und/oder einen durch die Anschlussmittel fließenden Strom zu messen. Festkörperbeleuchtungsmittel sind klein ausgebildet, jederzeit in verschiedensten Ausführungsformen erhältlich und haben bei geringem Energieverbrauch eine relativ hohe Lebensdauer. Bedingt durch die hohe Lebensdauer von Festkörperbeleuchtungsmitteln sind mit der Vorrichtung zum Prüfen von Solarzellen neben Kurzzeitprüfungen auch Langzeitprüfungen von Solarzellen möglich. Zur weiteren Verringerung des Energiebedarfs können Festkörperbeleuchtungsmittel mit einer hohen Strahlungsintensität und einem hohen Wirkungsgrad verwendet werden. Als Festkörperbeleuchtungsmittel werden bevorzugt Leuchtdioden (LEDs) verwendet.
Mit der erfindungsgemäßen Vorrichtung zum Prüfen von Solarzellen können jede Art von Solarzellen, beispielsweise Silizium-Solarzellen, Dünnschicht-Solarzellen, Dünnfilm-Solarzellen oder Stapelzellen, geprüft werden. Prüfen bedeutet, dass sämtliche oder nur einige der Kennwerte, Eigenschaften und Leistungsmerkmale von Solarzellen bestimmt werden können. Diese Kennwerte, Eigenschaften und Leistungsmerkmale der Solarzellen können insbesondere durch die Strom- und/oder Spannungsmesswerte (ggf. in Abhängigkeit von der auf die Solarzelle einwirkenden Strahlungsleistung und/oder der spezifischen Ausstrahlung des Beleuchtungsfelds) bestimmt werden. Die zu prüfenden Solarzellen können jede beliebige Form aufweisen und in jeder beliebigen Anordnung zusammengeschaltet sein (z.B. Serien- und/oder Parallelschaltung). Auch die Oberfläche der Solarzelle, auf welche die Strahlung einwirkt, d.h. die sogenannte "aktive Oberfläche", kann jede beliebige Form aufweisen.

Das Beleuchtungsfeld kann dazu eingerichtet sein, Strahlung mit einem Air Mass (AM) 1,5 Spektrum gemäß der International Electrotechnical Commission (IEC) Norm 60904-3 abzugeben. Insbesondere können LEDs verwendet werden, welche mit Hilfe von Farbkonversionspigmenten ein AM 1,5 Spektrum emittieren. Dabei kann eine aufgrund der Farbkonversion auftretende schwache Strahlungsintensität im Infrarotbereich mit Hilfe eines Infrarot-LED-Chips ausgeglichen werden.

Es ist aber auch denkbar, dass das Beleuchtungsfeld Strahlung mit einem anderen Spektrum abgibt. Insbesondere ist es denkbar, für die Prüfung amorpher Solarzellen, Hochleistungs-Weißlicht-LEDs zu verwenden.

Bevorzugt gibt das Beleuchtungsfeld Strahlung mit einer spektralen Verteilung an die mindestens eine Solarzelle ab, die an die spektrale Empfindlichkeit der zu prüfenden mindestens einen Solarzelle angepasst ist. Dabei kann Strahlung mit einer solchen spektralen Verteilung erzeugt werden, die an die zu prüfende Solarzelle angepasst ist. Zum Prüfen verschiedener Solarzellen können Strahlungen mit unterschiedlichen spektralen Verteilungen verwendet werden. Ferner können zum Anpassen der spektralen Verteilung der von dem Beleuchtungsfeld abgegebenen Strahlung an die spektrale Empfindlichkeit der zu prüfenden Solarzelle die Festkörperbeleuchtungsmittel ausgetauscht werden. Es ist auch denkbar, dass sich unterschiedliche Festkörperbeleuchtungsmittel, welche Strahlungen mit unterschiedlichen spektralen Verteilungen abgegeben, in dem Beleuchtungsfeld angeordnet sind, jedoch nur die für die zu prüfenden Solarzellen passenden Festkörperbeleuchtungsmittel aktiviert werden.

Für manche Solarzellen, beispielsweise für die Prüfung von Dünnfilm- oder Dünnschicht-Solarzellen bzw. als gestapelte Zellen ausgeführte Solarzellen, kann es vorteilhaft sein, dass das Beleuchtungsfeld im wesentlichen monochromatisches Licht abgibt. Das monochromatische Licht kann dabei durch die Ausbildung der Festkörperbeleuchtungsmittel als Leuchtdioden erzeugt werden.

Das Beleuchtungsfeld kann auch Strahlung mit einem Spektrum abgeben, welches sich aus zwei oder mehreren monochromatischen Wellen zusammensetzt.

Für eine möglichst genaue Prüfung der mindestens einen Solarzelle, d.h. einer Prüfung der mindestens einen Solarzelle bei gleichen Bedingungen für die gesamte aktive Oberfläche der mindestens einen Solarzelle, kann das Beleuchtungsfeld dazu eingerichtet sein, die Strahlung zumindest bereichsweise im wesentlichen homogen verteilt abzugeben. Im wesentlichen homogen verteilt bedeutet dabei, dass das Beleuchtungsfeld Strahlung mit im wesentlichen gleicher Strahlungsleistung abgibt. Bei entsprechender Ausrichtung der Solarzelle hinsichtlich des Beleuchtungsfelds mit Hilfe der Aufnahmevorrichtung kann die Strahlung im wesentlichen homogen verteilt auf der aktiven Oberfläche der Solarzelle auftreffen.

Damit das Beleuchtungsfeld die Strahlung im wesentlichen homogen verteilt abgibt, können die Festkörperbeleuchtungsmittel derart in dem Beleuchtungsfeld angeordnet sein, dass jeweils ein Festkörperbeleuchtungsmittel auf den Eckpunkten mindestens eines gleichseitigen Dreiecks liegt. Entsprechend können eine Mehrzahl von gleichseitigen Dreiecken vorgesehen sein, wobei benachbarte gleichseitige Dreiecke jeweils eine Seite teilen und die Festkörperbeleuchtungsmittel auf den Eckpunkten liegen. Dabei kann das Beleuchtungsfeld lückenlos mit gleichseitigen Dreiecken gefüllt (parkettiert) sein. Folglich kann ein Festkörperbeleuchtungsmittel den gleichen Abstand zu den sechs direkt benachbarten Festkörperbeleuchtungsmittel aufweisen. Dabei ist ersichtlich, dass am Rande des Beleuchtungsfelds angeordnete Festkörperbeleuchtungsmittel keine sechs direkt benachbarten Festkörperbeleuchtungsmittel aufweisen.

Die Festkörperbeleuchtungsmittel können auch derart in dem Beleuchtungsfeld angeordnet sein, dass sie auf Eckpunkten eines hexagonalen Netzes liegen, wobei das hexagonale Netz eine Mehrzahl von regelmäßigen Sechsecken aufweist und ein Festkörperbeleuchtungsmittel auf dem jeweiligen Mittelpunkt der regelmäßigen Sechsecke (bzw. jeweils in deren Zentren) angeordnet ist. Dabei kann das Beleuchtungsfeld lückenlos mit regelmäßigen bzw. regulären Sechsecken gefüllt (parkettiert) sein.

Durch die Anordnungen der Festkörperbeleuchtungsmittel auf den Eckpunkten der gleichseitigen Dreiecke bzw. auf dem hexagonalen Netz und den Mittelpunkten der regelmäßigen Sechsecke kann das Beleuchtungsfeld die Strahlung im wesentlichen homogen verteilt abgeben. Trifft die Strahlung auf die aktive Oberfläche der Solarzelle, so weist der Strahlungsanteil jedes Festkörperbeleuchtungsmittels meist in der Mitte die höchste Strahlungsleistung auf, wobei die Strahlungsleistung nach außen abfällt. Beispielsweise kann sich bei einer in Form einer Kreisfläche auf die aktive Oberfläche der mindestens einen Solarzelle einwirkenden Strahlung die Strahlungsleistung radial nach außen verringern. Entsprechend können sich bei der Anordnung der Festkörperbeleuchtungsmittel auf den Eckpunkten der gleichseitigen Dreiecke bzw. auf dem hexagonalen Netz und den Mittelpunkten der regelmäßigen Sechsecke die Strahlungsrandbereiche benachbarter Festkörperbeleuchtungsmittel auf der aktiven Oberfläche der mindestens einen Solarzelle überlappen, so dass Bereiche mit erhöhter einwirkender Strahlungsleistung (beispielsweise in der Mitte einer Kreisfläche) ausgeglichen werden können.

Die Festkörperbeleuchtungsmittel können dabei parallel zueinander ausgerichtet sein und Licht im wesentlichen in die gleiche Richtung ausstrahlen. Es ist auch denkbar, dass die Festkörperbeleuchtungsmittel zueinander verschwenkt bzw. verschwenkbar sind und in unterschiedlichen Richtungen die Solarzelle bestrahlen. Es ist auch möglich, dass einige Festkörperbeleuchtungsmittel die mindestens eine Solarzelle nur teilweise bestrahlen. Alternativ oder zusätzlich können die Festkörperbeleuchtungsmittel in unterschiedlichen Ebenen angeordnet sein. Um bei diesen Ausführungsformen dennoch eine homogene Verteilung der Strahlung zu erreichen, können die jeweiligen Festkörperbeleuchtungsmittel unterschiedliche Strahlungsleistungen abgeben.
Um auch Randbereiche der mindestens eine Solarzelle homogen zu bestrahlen, ist die Fläche des Beleuchtungsfelds vorzugsweise größer als die Fläche der mindestens eine Solarzelle. Dabei kann das Beleuchtungsfeld derart parallel zu der mindestens einen Solarzelle angeordnet sein, dass bei einer Projektion der aktiven Fläche der mindestens einen Solarzelle auf das Beleuchtungsfeld, die aktiven Fläche vollständig von dem Beleuchtungsfeld aufgenommen wird bzw. von dieser umgeben wird, so dass Randbereiche des Beleuchtungsfelds über die aktive Fläche der mindestens eine Solarzelle hinausragen.

Um noch einfacher eine im wesentlichen homogen verteilte Strahlung zu erzeugen, können die Festkörperbeleuchtungsmittel linsenförmige Strahleröffnungen aufweisen. Dadurch kann die Strahlung jedes Festkörperbeleuchtungsmittels im wesentlichen in Form einer Kreisfläche auf die aktive Oberfläche der mindestens eine Solarzelle abgegeben werden. Die linsenförmigen Strahleröffnungen der Festkörperbeleuchtungsmittel lassen sich dabei bevorzugt mit der Anordnung auf dem gleichseitigen Dreieck und dessen Mittelpunkt oder dem hexagonalen Netz kombinieren.

Zum Prüfen mehrerer Solarzellen bzw. eines aus mehreren Solarzellen bestehenden Solarzellenfelds zur gleichen Zeit kann das Beleuchtungsfeld modular ausgebildet sein, wobei Module des Beleuchtungsfelds lösbar in der Vorrichtung zum Prüfen von Solarzellen befestigt sind. Dabei besteht das Beleuchtungsfeld aus mehreren Beleuchtungsmodulen. Zum Bestrahlen einer größeren Anzahl von Solarzellen, d.h. zum Bereitstellen einer größeren Bestrahlungsfläche, kann die Größe des Beleuchtungsfelds durch Verbinden zusätzlicher Beleuchtungsmodule mit schon vorhandenen Beleuchtungsmodulen erhöht werden. Dabei muss zum Vergrößern der bestrahlten Fläche nicht der Abstand zwischen dem Beleuchtungsfeld und den Solarzellen (bzw. der Aufnahmevorrichtung) vergrößert werden. Folglich wird bei einer Erhöhung der Anzahl gleichzeitig zu prüfender Solarzellen der Raumbedarf der Vorrichtung zum Prüfen von Solarzellen nur gering vergrößert. Die lösbare Befestigung der Beleuchtungsmodule in der Vorrichtung zum Prüfen von Solarzellen kann beispielsweise durch Schnappverschlüsse realisiert werden. Dadurch ergibt sich eine individuelle Anpassbarkeit der Vorrichtung zum Prüfen von Solarzellen an die Anzahl gleichzeitig zu prüfender Solarzellen.

Zur Anpassung der von dem Beleuchtungsfeld abgegebenen Strahlung an die zu prüfenden Solarzellen kann die Vorrichtung zum Prüfen von Solarzellen ferner eine Messvorrichtung aufweisen, welche dazu eingerichtet ist, mindestens eine von der von dem Bestrahlungsfeld abgegebenen Strahlung abhängige Messgröße zu bestimmen. Beispielsweise kann es sich bei der Messvorrichtung um ein Beleuchtungsstärkemessgerät bzw. ein Luxmeter handeln.

Bevorzugt handelt es sich bei der Messgröße um eine der Größen Strahlungsleistung, spezifische Ausstrahlung, Lichtstärke, oder Leuchtdichte. Die Messgröße kann dabei direkt gemessen oder aus anderen gemessenen Größen abgeleitet bzw. berechnet werden.

Die Aufnahmevorrichtung kann dazu eingerichtet sein, die mindestens eine Solarzelle derart aufzunehmen, dass die aktive Oberfläche der mindestens einen Solarzelle auf einer Messebene bzw. Prüfebene liegt (d.h. mit ihr zusammenfällt), wobei die Messvorrichtung dazu eingerichtet ist, die Messgröße an einer bestimmten Stelle auf der Messebene zu bestimmen. Dazu kann die Messvorrichtung nach Entfernung der mindestens einen Solarzelle aus der Aufnahmevorrichtung die Messgröße in der Messebene bestimmen.

Die Messvorrichtung kann ferner dazu eingerichtet sein, entlang der Messebene bewegt zu werden. Dadurch können eine Mehrzahl von Messpunkten in der Messebene bestimmt werden. Durch die Aufnahme mehrerer Messpunkte kann beispielsweise eine Verteilung der Strahlungsleistung über die gesamte Messebene ermittelt werden.

Die Vorrichtung zum Prüfen von Solarzellen kann ferner eine Auswertungseinheit aufweisen, welche dazu eingerichtet ist, eine örtliche Verteilung von in der Messebene gemessener Messwerte der Messgröße zu bestimmen. Die Auswertungseinheit kann dabei von der Messvorrichtung Ortskoordinaten, d.h. eindeutige Positionen in der Messebene, und zugehörige Messwerte der Messgröße erhalten. Die erhaltenen Ortskoordinaten und Messwerte der Messgröße können von der Auswertungseinheit weiterverarbeitet und als örtliche Verteilung gespeichert werden.

Gemäß einer bevorzugten Ausführungsform der vorliegenden Erfindung weist die Vorrichtung zum Prüfen von Solarzellen ferner eine Vorrichtung zum Steuern der von den Festkörperbeleuchtungsmitteln abgegebenen Strahlung in Abhängigkeit von der örtlichen Verteilung auf. Die Vorrichtung zum Steuern der von den Festkörperbeleuchtungsmitteln abgegebenen Strahlung erhält von der Messvorrichtung die örtliche Verteilung, d.h. die Ortskoordinaten und Messwerte der Messgröße, und steuert in Abhängigkeit von diesen die Festkörperbeleuchtungsmittel. Das Steuern der Festkörperbeleuchtungsmittel kann dabei ein Steuern einer oder mehrerer der Größen Strom, Strahlungsleistung, spezifische Ausstrahlung, Lichtstärke und Leuchtdichte umfassen. Die Steuerung der Festkörperbeleuchtungsmittel kann beispielsweise mit Hilfe einer oder mehrerer steuerbarer Stromquellen erfolgen.

Die Vorrichtung zum Steuern der von den Festkörperbeleuchtungsmitteln abgegebenen Strahlung kann ferner dazu eingerichtet sein, die Festkörperbeleuchtungsmittel derart zu steuern, dass die Strahlung in der Messebene zumindest bereichsweise im wesentlichen homogen verteilt ist. So können, falls mit Hilfe der Messvorrichtung festgestellt wurde, dass einzelne Bereiche bzw. Stellen der Messebene nicht gleichmäßig bestrahlt werden oder die örtliche Verteilung der auf die Messebene einwirkenden Strahlung Abweichungen aufweist, die Festkörperbeleuchtungsmittel so gesteuert werden, dass die auf die Messebene einwirkende Strahlung wieder homogen bzw. im wesentlichen gleichmäßig verteilt wird. Durch die so erreichte im wesentlichen homogene Verteilung der Strahlung in der Messebene kann auch auf eine im wesentlichen homogene Verteilung der Strahlung auf der aktiven Oberfläche der Solarzelle geschlossen werden.

Bevorzugt gibt das Beleuchtungsfeld Strahlung mit einer derartigen spezifischen Ausstrahlung ab, dass die Bestrahlungsstärke in der Messebene bzw. auf der aktiven Oberfläche der Solarzelle 1000 W/m² beträgt. Die Bestrahlungsstärke von 1000 W/m² ergibt sich dabei bevorzugt bei einer Temperatur von 25°C in der Messebene bzw. auf der aktiven Oberfläche der Solarzelle.

Gemäß einer bevorzugten Ausführungsform weist die Vorrichtung zum Prüfen von Solarzellen ferner eine Vorrichtung zum Steuern der von den Festkörperbeleuchtungsmitteln abgegebenen Strahlung in Abhängigkeit von der Messgröße auf. Dabei kann die Vorrichtung zum Steuern der von den Festkörperbeleuchtungsmitteln abgegebenen Strahlung die Festkörperbeleuchtungsmittel in Abhängigkeit von den Messergebnissen der Messvorrichtung steuern bzw. so nachsteuern, dass eine gewünschte Strahlung auf die Messebene bzw. die aktive Oberfläche der Solarzelle einwirkt.

Zur genauen Steuerung der in der Messebene auftretenden Strahlung bzw. zur Ermöglichung der Abgabe einer im wesentlichen homogen verteilten Strahlung in der Messebene kann die Vorrichtung zum Steuern der von den Festkörperbeleuchtungsmitteln abgegebenen Strahlung dazu eingerichtet sein, die Festkörperbeleuchtungsmittel individuell und/oder gruppenweise zu steuern. Dadurch ist es möglich, Bereiche mit inhomogen verteilter Strahlung in der Messebene, d.h. auch auf der aktiven Oberfläche der mindestens einen Solarzelle, auszugleichen, ohne dass eine mechanische Veränderung (z.B. ein mechanisches Verstellen der Festkörperbeleuchtungsmittel) an der Vorrichtung zum Prüfung von Solarzellen vorgenommen werden muss. Dadurch kann der Solarzelle insbesondere in Abhängigkeit von dem Zustand der Festkörperbeleuchtungsmittel, d.h. der von den Festkörperbeleuchtungsmitteln abgegebenen Strahlung, eine im wesentlichen homogen verteilte Strahlung zugeführt werden. So können beispielsweise Alterungserscheinungen der Festkörperbeleuchtungsmittel kompensiert werden. Es ist auch denkbar, zu Beginn einer Prüfungsserie die Vorrichtung zum Prüfen von Solarzellen zu kalibrieren.

Das Spektrum der von den Festkörperbeleuchtungsmitteln emittierten Strahlung kann sich mit deren Umgebungstemperatur ändern. Damit sich die Festkörperbeleuchtungsmittel nicht zu stark erwärmen bzw. deren Umgebungstemperatur nicht zu stark ansteigt, können diese auf mindestens einem Kühlkörper angebracht sein. Die Dicke des mindestens einen Kühlkörpers kann dabei von der gewünschten Wärmeabfuhr abhängen.

Zum Abführen der von den Festkörperbeleuchtungsmitteln erzeugter Wärme weg von den Festkörperbeleuchtungsmitteln kann ferner mindestens ein Lüfter vorgesehen sein. Die Drehzahl des mindestens einen Lüfters kann derart steuerbar sein, dass die Temperatur an den Festkörperbeleuchtungsmitteln einen gewünschten Wert aufweist.

Das Beleuchtungsfeld kann zwischen der mindestens einen Solarzelle und dem mindestens einen Lüfter angeordnet und dazu eingerichtet sein, die aktive Oberfläche der mindestens einen Solarzelle zu bestrahlen. Dabei können in dem Beleuchtungsfeld Öffnungen bzw. Aussparungen ausgebildet sein, durch welche die durch die Bestrahlung erwärmte Luft zwischen der mindestens einen Solarzelle und dem Beleuchtungsfeld von dem mindestens einen Lüfter nach außen abgesaugt werden kann. Vorzugsweise sind die Öffnungen im Zentrum bzw. an den Mittelpunkten der gleichseitigen Dreiecke des Beleuchtungsfelds ausgebildet. Falls das Beleuchtungsfeld unterhalb der mindestens einen Solarzelle angeordnet ist und deren aktive Oberfläche von unten bestrahlt, kann der mindestens eine Lüfter unterhalb des Beleuchtungsfelds angeordnet sein und erwärmte Luft nach unten absaugen, so dass die erwärmte Luft aus dem Raum zwischen der mindestens einen Solarzelle und dem Beleuchtungsfeld zumindest teilweise entfernt wird.

Die Erfindung wird nachfolgend unter Bezugnahme auf die beigefügten Zeichnungen anhand beispielhafter Ausführungsformen weiter erläutert. Es zeigen:
- Figur 1: eine schematische Darstellung einer Vorrichtung zum Prüfen von Solarzellen;
- Figur 2: eine schematische Darstellung einer Anordnung von Festkörperbeleuchtungsmitteln in einem Beleuchtungsfeld;
- Figur 3: eine schematische Darstellung eines Beleuchtungsmoduls und
- Figur 4: eine schematische Darstellung eines modular aufgebauten Beleuchtungsfelds.

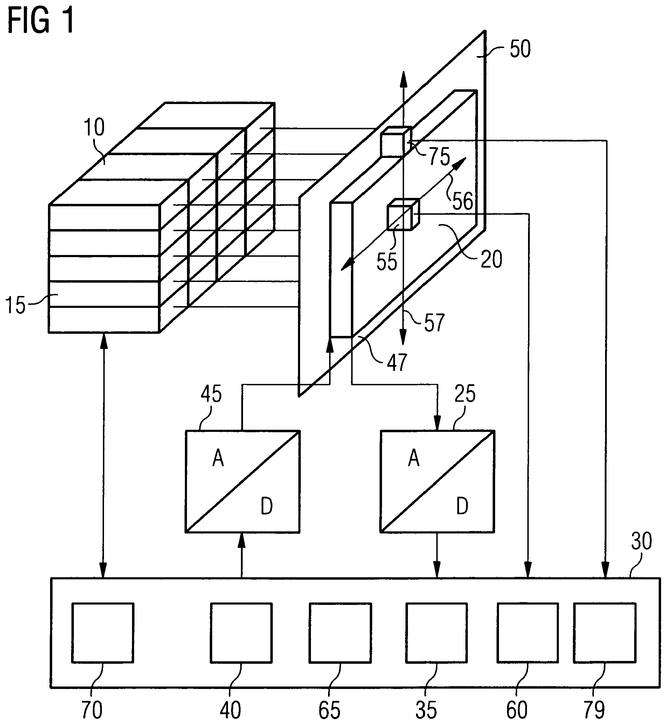

Die in Figur 1 gezeigte beispielhafte Ausführungsform einer Vorrichtung zum Prüfen von Solarzellen umfasst ein modular aufgebautes Beleuchtungsfeld 10 mit zwanzig Beleuchtungsmodulen. In jedem Beleuchtungsmodul 15 sind mehrere Leuchtdioden (nicht gezeigt) angeordnet. Das Beleuchtungsfeld 10 bestrahlt ein Solarmodul 20 und gibt dabei Strahlungsenergie an das Solarmodul 20 ab. Die Leuchtdioden erzeugen dabei die Strahlung zum Beleuchten des Solarmoduls 20. Die Leuchtdioden geben jeweils Strahlung mit einem AM 1,5 Spektrum gemäß der IEC Norm 60904-3 (Klasse A, B, C gemäß IEC 60904-9) ab. Die vorliegende Erfindung ist jedoch nicht auf die Abgabe von Strahlung mit einem AM 1,5 Spektrum beschränkt. In Abhängigkeit von der Art des zu bestrahlenden Solarmoduls 20 können Strahlungen mit unterschiedlichen Spektren abgegeben werden.

Das Solarmodul 20 kann aus einer oder mehreren Solarzellen, beispielsweise Silizium-Solarzellen, Dünnschicht-Solarzellen, Dünnfilm-Solarzellen oder Stapelzellen, bestehen. Die Solarzellen können auf jede erdenkliche Weise zu dem Solarmodul 20 (z.B. Parallel- oder Serienschaltung oder einer Kombination davon) zusammengeschaltet werden.

Das Solarmodul 20 weist eine aktive Oberfläche (in Figur 1 nicht ersichtlich) auf, auf welche die Strahlung des Beleuchtungsfelds 10 einwirkt. Die aktive Oberfläche ist eben ausgebildet. Das Beleuchtungsfeld 10 ist hinsichtlich der aktiven Oberfläche des Solarmoduls 20 derart ausgerichtet, dass die von dem Beleuchtungsfeld 10 (d.h. den Leuchtdioden) emittierte Strahlung direkt und auf kürzestem Weg auf die aktive Oberfläche des Solarmoduls 20 trifft. Die aktive Oberfläche des Solarmoduls 20 ist dabei nicht auf eine ebene Oberfläche beschränkt. Das Solarmodul 20 kann beispielsweise auch eine gekrümmte oder runde aktive Oberfläche aufweisen.

Das Solarmodul 20 wandelt die aufgenommene Strahlungsenergie in elektrische Energie um. Dabei wirkt das Solarmodul 20 im Prinzip als eine Stromquelle, welche einen elektrischen Strom erzeugt. Analoge Messwerte des Solarmoduls 20, z.B. die an dem Solarmodul 20 anliegende Spannung und der durch das Solarmodul 20 fließende Strom, werden von einem Analog-Digital-Wandler 25 digital gewandelt und einer Messeinheit 30 zugeführt. Der Analog-Digital-Wandler 25 kann auch einen Quadrantenverstärker und/oder eine rechnergesteuerte Stromsenke umfassen. In der Messeinheit 30 befindet sich eine erste Auswertungseinheit 35 zum Auswerten der von dem Analog-Digital-Wandler 25 erhaltenen Messwerte. Beispielsweise kann die Auswertungseinheit 35 die von der Solarmodul 20 erzeugte elektrische Leistung berechnen. Die Auswertungseinheit 35 kann ferner einen Messverstärker (nicht gezeigt) aufweisen zum Verstärken der von dem Analog-Digital-Wandler 25 erhaltenen Messwerte.

Damit durch die Auswertungseinheit 35 nicht nur die Leerlaufspannung und/oder der Kurzschlussstrom des Solarmoduls 20 gemessen werden kann, weist die Messeinheit 30 ferner eine veränderbare Lasteinheit 40 auf, mit dessen Hilfe über einen Digital-Analog-Wandler 45 eine veränderbare Last an das Solarmodul 20 angelegt werden kann. Beispielsweise kann die veränderbare Lasteinheit 40 ein Potentiometer umfassen, mit dessen Hilfe die veränderbare Last einstellbar ist. Die Änderung der Last kann rechnergestützt erfolgen. Somit kann die erste Auswertungseinheit 35 neben der Leerlaufspannung und dem Kurzschlussstrom auch U-/I-Kennlinien oder bestimmte Prüfpunkte des Solarmoduls 20 bestimmen. Die Auswertungseinheit 35 kann auch weitere Kennwerte des Solarmoduls 20, wie beispielsweise Spannung im bestmöglichen Betriebspunkt, Strom im Betriebspunkt mit maximaler Leistung, maximale erzielbare Leistung oder Wirkungsgrad des Solarmoduls 20, bestimmen. Die Wandler 25 und 45 sind über eine Ansch!usseinheit 47 mit dem Solarmodul 20 verbunden. Obwohl in der Figur 1 das Beleuchtungsfeld 10, die Messeinheit 30 und die Wandler 25, 45 als separate Einheiten dargestellt sind, können diese auch in einer Einheit kombiniert sein.

Das Solarmodul 20 wird in einer Aufnahmevorrichtung (nicht gezeigt) an einer vorbestimmten Position und in einem vorbestimmten Abstand von dem Beleuchtungsfeld 10 aufgenommen bzw. gehalten. Die Aufnahmevorrichtung ist derart ausgebildet, dass das Solarmodul 20 in diese eingefügt bzw. von dieser wieder entfernt werden kann. Insbesondere hält die Aufnahmevorrichtung das Solarmodul 20 derart in einer vorbestimmten Position und in einem vorbestimmten Abstand von dem Beleuchtungsfeld 10, dass die aktive Oberfläche des Solarmoduls 20 mit einer Messebene 50 zusammenfällt. Die Messebene 50 ist eine Prüfebene und weist die Form der aktiven Oberfläche des Solarmoduls 20 auf. Die Aufnahmevorrichtung kann auch so ausgebildet sein, dass sie hinsichtlich ihrer Ausrichtung zu dem Beleuchtungsfeld verschwenkt werden kann.

Die Vorrichtung zum Prüfen von Solarzellen weist ferner eine Messvorrichtung 55 auf. In dem Ausführungsbeispiel der Figur 1 handelt es sich bei der Messvorrichtung 55 um ein Strahlungsleistungsmessgerät. Die vorliegende Erfindung ist jedoch nicht auf Strahlungsleistungsmessgeräte beschränkt. Bei der Messvorrichtung 55 kann es sich um jede Art von Messgerät handeln, welches eine von der von dem Bestrahlungsfeld 10 abgegebenen Strahlung abhängige Messgröße zu bestimmen vermag. Bei der Messvorrichtung 55 kann es sich insbesondere um ein Messgerät handeln, welches mindestens eine der Größen Strahlungsleistung, spezifische Ausstrahlung, Lichtstärke und Leuchtdichte der von dem Bestrahlungsfeld 10 abgegebenen Strahlung bestimmen kann. Entsprechend können die nachfolgend hinsichtlich eines Strahlungsleistungsmessgeräts beschriebenen Merkmale auch hinsichtlich jeder anderen Art von Messvorrichtung verwendet werden.

In der Figur 1 ist das Strahlungsleistungsmessgerät 55 zusammen mit dem Solarmodul 20 gezeigt. In einer praktischen Ausführungsform bestrahlt das Bestrahlungsfeld 10 jedoch entweder das Strahlungsleistungsmessgerät 55 oder das Solarmodul 20.

Zum Messen der auf die Messebene 50 einwirkenden Strahlung bzw. deren örtlicher Verteilung und zum Kalibrieren der Vorrichtung zum Prüfen von Solarzellen wird das in der Figur 1 gezeigte Solarmodul 20 entfernt und das Strahlungsleistungsmessgerät 55 misst die auf die Messebene 50 einwirkende Strahlungsleistung, d.h. die Strahlungsleistung, welche bei Vorhandensein des Solarmoduls 20 auf dessen aktive Oberfläche einwirkt. Nach der Messung wird das Strahlungsleistungsmessgerät 55 entfernt und das Solarmodul 20 wieder in die Vorrichtung zum Prüfen von Solarzellen eingesetzt.

Das Strahlungsleistungsmessgerät 55 misst mindestens die an einer bestimmten Stelle in der Messebene 50 auf diese einwirkende Strahlungsleistung des Beleuchtungsfelds 10. Das Strahlungsleistungsmessgerät 55 ist, wie durch die Pfeile 56, 57 angedeutet, parallel zu der Messebene 50 beweglich ausgebildet. Dazu ist das Strahlungsleistungsmessgerät 55 mit einer Bewegungsvorrichtung (nicht gezeigt) zum Bewegen des Strahlungsleistungsmessgerät 55 verbunden. Die Bewegungsvorrichtung kann mehrere Servo- oder Schrittmotoren aufweisen, welche von der Messeinheit 30 gesteuert werden. Alternativ kann das Strahlungsleistungsmessgerät 55 auch manuell bewegbar ausgebildet sein. Durch die Bewegbarkeit des Strahlungsleistungsmessgeräts 55 parallel zu der Messebene 50 kann die auf das Solarmodul 20 einwirkende Strahlungsleistung nicht nur an einer Stelle sondern über die gesamte Messebene 50 gemessen werden. Dazu werden mehrere Messungen vorgenommen. Folglich kann eine Verteilung der auf das Solarmodul 20 einwirkenden Strahlungsleistung über die gesamte Messebene 50 bestimmt werden.

Die Messwerte des Strahlungsleistungsmessgeräts 55 werden einer Steuerungseinheit 60 in der Messeinheit 30 zugeführt. Bei der Steuerungseinheit 60 kann es sich um einen Mikrokontroller handeln. Die Steuerungseinheit 60 steuert auch die Bewegung des Strahlungsleistungsmessgeräts 55, d.h. die Bewegungsvorrichtung. Folglich kennt die Steuerungseinheit 60 die Position des Strahlungsleistungsmessgeräts 55 und kann die durch das Strahlungsleistungsmessgerät 55 gemessenen Strahlungsleistungswerte zusammen mit den jeweiligen Positionskoordinaten des Strahlungsleistungsmessgeräts 55 in einer Speichervorrichtung 65 in der Messeinheit 30 speichern. In der Speichervorrichtung 65 wird die Verteilung der von dem Strahlungsleistungsmessgerät 55 gemessenen Strahlungsleistungsmesswerte über die Messebene 50 in Tabellenform gespeichert. Die Messwerte können auch zusammen mit der Messzeit gespeichert werden. Die Messung der Strahlungsleistungsmesswerte über die Messebene 50 kann dabei automatisch unter Steuerung durch die Steuerungseinheit 60 erfolgen. Dazu weist die Steuerungseinheit 60 eine Software auf, welche ein Abtasten bzw. Durchlaufen der Messebene 50 steuert.

Die Messeinheit 30 weist ferner eine Steuerungsvorrichtung 70 auf. Bei der Steuerungsvorrichtung 70 kann es sich um einen Mikrokontroller handeln. Die Steuerungsvorrichtung 70 kann mit der Steuerungseinheit 60 als eine Einheit ausgebildet sein. Die Steuerungsvorrichtung 70 ist mit dem Beleuchtungsfeld 10 verbunden und steuert die von den Leuchtdioden in dem Beleuchtungsfeld 10 abgegebene Strahlung. Dabei sind verschiedene Möglichkeiten zum Steuern der Strahlung der Leuchtdioden denkbar. Beispielsweise kann der den Leuchtdioden zugeführte Strom mit Hilfe einer steuerbaren Stromquelle gesteuert werden. Die Steuerung kann auch mit Hilfe eines DC-DC Wandlers oder einer Pulsweitenmodulation erfolgen. Die Steuerungsvorrichtung 70 steuert die Leuchtdioden bevorzugt derart, dass bei 25°C in der Messebene 55 bzw. auf der aktiven Oberfläche des Solarmoduls 20 eine Bestrahlungsstärke von 1000 W/m² in der Messebene 55 bzw. auf der aktiven Oberfläche des Solarmoduls 20 auftritt. Bevorzugt steuert die Steuerungsvorrichtung 70 die Leuchtdioden derart, dass die sogenannten "Standard Test Conditions" (STC) eingehalten werden. Da die Messfläche des Strahlungsleistungsmessgeräts 55 bzw. die von dem Strahlungsleistungsmessgerät 55 abgetastete Fläche bekannt ist, kann die Steuerungsvorrichtung 70 mit Hilfe der gemessenen Strahlungsleistungswerte die Bestrahlungsstärke berechnen. Die Steuerungsvorrichtung 70 erhält ferner Messwerte von dem Beleuchtungsfeld 10.

Die Steuerungsvorrichtung 70 steuert die Leuchtdioden in Abhängigkeit von den in der Speichervorrichtung 60 gespeicherten Strahlungsleistungsmesswerten des Strahlungsleistungsmessgeräts 55, d.h. insbesondere der örtlichen Verteilung der auf die aktive Oberfläche des Solarmoduls 20 einwirkenden Strahlungsleistung. Die Steuerungsvorrichtung 70 steuert die Leuchtdioden derart, dass die auf die Messebene 50 bzw. die aktive Oberfläche des Solarmoduls 20 einwirkende Strahlung im wesentlichen homogen über die Messebene 50 bzw. die aktive Oberfläche des Solarmoduls 20 verteilt ist, d.h. keine wesentlichen Strahlungsleistungsmaxima bzw. -minima vorkommen. Die Steuerungsvorrichtung 70 kann dabei jede Leuchtdiode individuell oder gruppenweise steuern. Dadurch können die Leuchtdioden so gesteuert werden, dass sich eine im wesentlichen homogene Strahlungsleistungsverteilung auf der aktiven Oberfläche des Solarmoduls 20 ergibt. So kann eine Leuchtdiode derart gesteuert werden, dass sie temporär eine höhere Strahlungsleistung abgibt, um damit ein Strahlungsleistungsminimum auf der Messebene 50 bzw. der aktiven Oberfläche des Solarmodul 20 auszugleichen. Bei der Steuerung der Strahlungsleistung der Leuchtdioden können auch zusätzliche externe Lichtweinwirkungen, beispielsweise von einer Raumbeleuchtung, berücksichtigt werden. Ferner kann berücksichtigt werden, dass nicht sämtliche von dem Beleuchtungsfeld 10 emittierte Strahlung auf die aktive Oberfläche des Solarmoduls 20 trifft und sich die Strahlungsleistung entlang des Strahlungswegs verringert.

Die Steuerungsvorrichtung 70 kann ferner die Drehzahl eines oder mehrerer Lüfter (nicht gezeigt) in dem Beleuchtungsfeld 10 bzw. in jedem Beleuchtungsmodul 15 derart individuell steuern, dass in jedem Beleuchtungsmodul 15 im wesentlichen die gleiche Temperatur existiert. Dadurch kann verhindert werden, dass die Leuchtdioden Licht mit unterschiedlichen Spektren emittieren.

Die Beleuchtungsmodule 15 mit den darin angeordneten Leuchtdioden können durch andere Beleuchtungsmodule ausgetauscht werden. Dadurch ist es möglich, in Abhängigkeit von den zu prüfenden Solarzellen, Leuchtdioden mit einer spektralen Verteilung zu verwenden, die an die spektrale Empfindlichkeit der zu prüfenden Solarzellen angepasst ist. Folglich kann mit der Vorrichtung zum Prüfen von Solarzellen jede Art von Solarzellen geprüft werden.

Optional kann die Vorrichtung zum Prüfen von Solarzellen ein an einem Referenzmesspunkt angeordnetes Strahlungsintensitätsmessgerät 75 für eine Referenzmessung aufweisen. Das Strahlungsintensitätsmessgerät 75 ist mit einer Steuerungs- und Auswertungseinheit 79 in der Messeinheit 30 verbunden. Mit Hilfe des Strahlungsintensitätsmessgeräts 75 kann ein Referenzwert des zeitlichen Verlaufs der auf das Solarmodul einwirkenden Strahlungsintensität bestimmt werden. Der Referenzmesspunkt, d.h. die Anordnung des Strahlungsintensitätsmessgeräts 75, kann sich beispielsweise wie in Figur 1 gezeigt seitlich oberhalb des Solarmoduls 20 befinden. In Abhängigkeit von dem gemessenen Referenzwert kann die Intensität der Strahlung bzw. die Strahlungsleistung des Beleuchtungsfelds 10 angepasst und das Beleuchtungsfeld 10 kalibriert werden.

Obwohl in der Figur 1 das Strahlungsintensitätsmessgerät 75 vorgesehen ist, ist bei der vorliegenden Erfindung ein Strahlungsintensitätsmessgerät 75 für eine Referenzmessung nicht notwendig, da die Lichtintensität der von dem Beleuchtungsfeld 10 abgegebenen Strahlung zeitlich so stabil ist, dass insbesondere die Voraussetzungen der Norm IEC 60904-9 erfüllt werden und eine Anpassung bzw. Steuerung der von dem Beleuchtungsfeld 10 abgegebenen Strahlung für Kalibrierungszwecke nicht notwendig ist.

Entgegen der in der Figur 1 gezeigten Anordnung kann die gezeigte Vorrichtung zum Prüfen von Solarzellen auch um 90° im Gegenuhrzeigersinn gedreht sein, so dass sich das Beleuchtungsfeld 10 unterhalb des Solarmoduls 20 befindet und somit von unten das Solarmodul 20 anstrahlt.

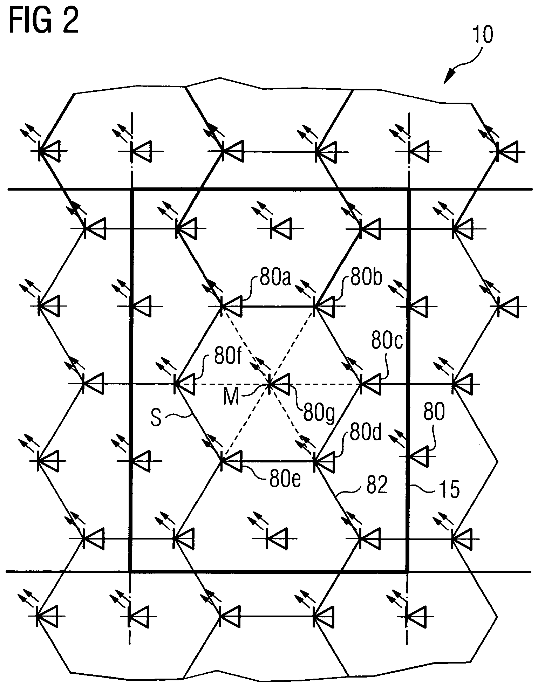

Die Figur 2 zeigt eine schematische Darstellung einer beispielhaften Anordnung von Festkörperbeleuchtungsmitteln in einem Beleuchtungsfeld 10. Das Beleuchtungsfeld 10 wird von vorne gezeigt (d.h. die Festkörperbeleuchtungsmittel strahlen aus der Zeichenebene heraus) und besteht aus mehreren Beleuchtungsmodulen, wobei das Beleuchtungsmodul 15 vollständig und acht daran angrenzende Beleuchtungsmodule nur teilweise gezeigt werden. Das in der Figur 2 beispielhaft gezeigte Beleuchtungsmodul 15 umfasst eine Mehrzahl als Leuchtdioden 80 ausgebildete Festkörperbeleuchtungsmittel. Die Anzahl von Leuchtdioden 80 in einem Beleuchtungsmodul 15 ist dabei nicht auf die gezeigte Anzahl beschränkt. Bevorzugt befinden sich 48 oder mehr Leuchtdioden 80 in einem Beleuchtungsmodul 15.

Die Leuchtdioden 80 sind in dem Beleuchtungsmodul 15 auf Eckpunkten eines hexagonalen Netzes 82 bestehend aus regelmäßigen Sechsecken S und den Mittelpunkten M der regelmäßigen Sechsecke S liegend angeordnet. Wie aus der Figur 2 ersichtlich ist, liegen die Leuchtdioden 80a, 80b, 80c, 80d, 80e und 80f auf den Eckpunkten des regelmäßigen Sechsecks S und die Leuchtdiode 80g liegt auf dem Mittelpunkt M des regelmäßigen Sechsecks S. Ferner liegen die Leuchtdioden 80 auf Eckpunkten gleichseitiger Dreiecke, wobei die Leuchtdioden 80a, 80b und 80g, die Leuchtdioden 80b, 80c und 80g, die Leuchtdioden 80c, 80d und 80g, die Leuchtdioden 80d, 80e und 80g und die Leuchtdioden 80e, 80a und 80g jeweils ein gleichseitiges Dreieck bilden. Das Beleuchtungsmodul 15 ist lückenlos mit gleichseitigen Dreiecken parkettiert, so dass die Leuchtdiode 80g jeweils den gleichen Abstand zu den benachbarten Leuchtdioden 80a, 80b, 80c, 80d, 80e, 80f aufweist. Die Leuchtdioden 80 können beispielsweise auf einer Leiterplatte angeordnet sein. Die gezeigten Verbindungslinien zwischen den Leuchtdioden 80 deuten dabei nur das hexagonale Netz bzw. die gleichseitigen Dreiecke an und beziehen sich nicht auf die jeweiligen Anschlüsse bzw. Verkabelung zum Steuern der Leuchtdioden 80.

Die Leuchtdioden 80 bestrahlen das in der Figur 1 gezeigte Solarmodul 20. Durch die gezeigte Anordnung der Leuchtdioden 80 ergibt sich eine im wesentlichen homogene Strahlungsverteilung auf der aktiven Oberfläche, d.h. der Messebene 50, des Solarmoduls 20.

Die vorliegende Erfindung ist jedoch nicht auf die gezeigte Anordnung der Leuchtdioden 80 beschränkt. Andere Anordnungen von Leuchtdioden auf dem Beleuchtungsfeld 10 sind denkbar. Die Anordnung von Leuchtdioden muss jedoch derart sein, dass eine im wesentlich homogen verteilte Strahlungsleistung dem Solarmodul, d.h. der Messebene 50, zugeführt wird. Die Anzahl von Leuchtdioden 80 in einem Beleuchtungsmodul ist dabei nicht auf die gezeigte Anzahl beschränkt. Die Leuchtdioden 80 können ferner in unterschiedlichen Ebenen in dem Beleuchtungsfeld 10 angeordnet sein und in Abhängigkeit von ihrer Anordnung gesteuert werden. Die Leuchtdioden 80 können beispielsweise verschwenkbar in dem Beleuchtungsfeld 10 angeordnet sein. So können die Leuchtdioden 80 auch unterschiedliche Bereiche auf der aktiven Oberfläche des Solarmoduls 20 bestrahlen. Beispielsweise kann eine zentral in dem Beleuchtungsfeld 10 angeordnete Leuchtdiode 80 einen Randbereich der aktiven Oberfläche des Solarmoduls 20 bestrahlen. Um dennoch eine im wesentlichen homogene Strahlungsleistungsverteilung zu ermöglichen, können die einzelnen Leuchtdioden individuell oder gruppenweise gesteuert werden. Es ist auch denkbar, dass Leuchtdioden, welche Strahlung mit unterschiedlicher spektraler Verteilung abgeben, in der selben oder in unterschiedlichen Ebenen in dem Beleuchtungsfeld 10 angeordnet sind und in Abhängigkeit von den zu prüfenden Solarzellen nur Leuchtdioden mit gleicher spektraler Verteilung zur selben Zeit strahlen.

Die Leuchtdioden 80 können individuell, gruppenweise oder gesamt von der in der Figur 1 gezeigten Steuerungsvorrichtung 70 gesteuert werden. Somit kann die abgegebene Strahlung jeder Leuchtdiode 80 individuell gesteuert werden. Falls beispielsweise durch die in der Figur 1 gezeigte Messeinheit 30 festgestellt wird, dass einzelne Bereiche der Messebene 50 mit einer abweichenden Strahlungsleistung bestrahlt werden, so kann die Strahlungsleistung der diesen Bereich bestrahlenden Leuchtdiode(n) 80 verändert werden. Dadurch kann gewährleistet werden, dass die Strahlungsleistung des Beleuchtungsfelds 10 im wesentlichen homogen verteilt auf die aktive Oberfläche des Solarmoduls 20 einwirkt.

Bei den Leuchtdioden 80 handelt es sich um Festkörperstrahlungsquellen mit hoher Intensität und einem hohen Wirkungsgrad. Dadurch kann der Energieverbrauch der Leuchtdioden gering gehalten werden. Darüber hinaus weisen Leuchtdioden grundsätzlich einen relativ geringen Energiebedarf auf. Des weiteren gibt es eine Vielzahl von Leuchtdioden mit unterschiedlichen spektralen Verteilungen. Folglich ist es auf einfach Weise möglich, vorhandene Leuchtdioden durch andere Leuchtdioden, deren spektrale Verteilung an die spektrale Empfindlichkeit der zu prüfenden Solarzellen angepasst ist, auszutauschen.

Wie aus den Figuren 1 und 2 ersichtlich ist, ist das Beleuchtungsfeld 10 modular aus einer Mehrzahl von Beleuchtungsmodulen 15 aufgebaut. Dadurch kann für größere Solarmodule 20 bzw. für eine Mehrzahl von gleichzeitig zu prüfenden Solarmodulen das Beleuchtungsfeld 10 auf einfache Weise vergrößert werden. Folglich ist zur Vergrößerung des Beleuchtungsfelds 10 keine Vergrößerung des Abstands zwischen dem Beleuchtungsfeld 10 und dem Solarmodul 20 notwendig, sondern es muss lediglich ein weiteres Beleuchtungsmodul an schon vorhandene Beleuchtungsmodule angebaut werden. Dadurch ergibt sich bei der Erweiterung der Vorrichtung zum Prüfen von Solarzellen eine nur geringe räumliche Vergrößerung. Durch eine Vergrößerung des Abstands zwischen dem Beleuchtungsfeld 10 und dem Solarmodul 20 würde sich eine wesentlich höhere Vergrößerung des benötigten Raums ergeben.

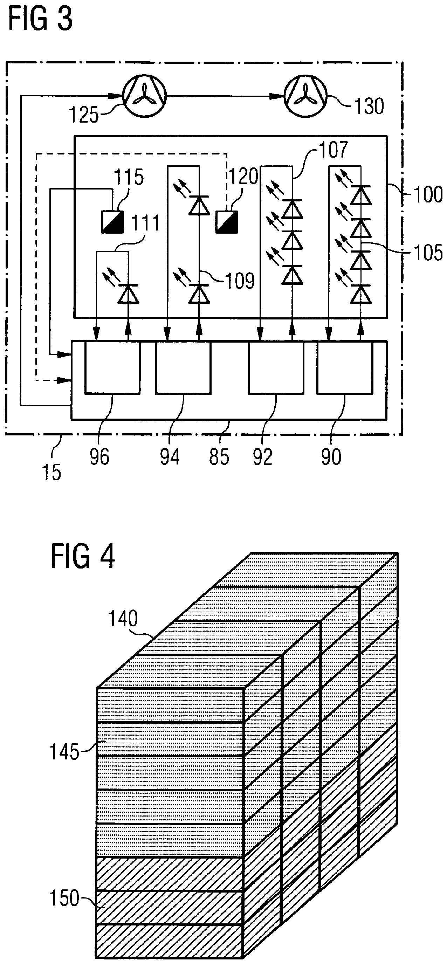

Die Figur 3 zeigt schematisch ein Ausführungsbeispiel eines Beleuchtungsmoduls 15. Das Beleuchtungsmodul 15 wird von vorne gezeigt, d.h. die Festkörperbeleuchtungsmittel strahlen aus der Zeichenebene heraus. Das Beleuchtungsmodul 15 umfasst eine Steuerungseinheit 85 mit mehreren Treiberelementen 90, 92, 94, 96, eine Leuchtdioden-Leiterplatte 100 mit mehreren Leuchtdioden-Gruppen 105, 107, 109, 111, zwei Temperaturfühler 115, 120 und zwei Ventilatoren 125, 130.

Die Treiberelemente 90, 92, 94, 96 versorgen die Leuchtdioden-Gruppen 105, 107, 109, 111 über eine nicht gezeigte steuerbare Stromquelle mit Strom. In diesem Ausführungsbeispiel kann jede Leuchtdioden-Gruppe 105, 107, 109, 111 individuell gesteuert, d.h. mit Strom versorgt, werden. Durch Änderung des von der Stromquelle den Treiberelementen 90, 92, 94, 96 zugeführten Stroms kann die von den Leuchtdioden-Gruppe 105, 107, 109, 111 abgegebene Strahlung verändert werden.

Die Temperaturfühler 115, 120 messen Temperaturänderungen an den Leuchtdioden-Gruppen 105, 107, 109, 111. Die Messwerte der Temperaturfühler 115, 120 werden der Steuerungseinheit 85 zugeführt. Die Steuereinheit 85 ist mit den Ventilatoren 125, 130 verbunden und steuert diese in Abhängigkeit der von den Temperaturfühlern 115, 120 bestimmten Temperaturwerte.

Obwohl in der Figur 3 nur zwei Temperaturfühler 115, 120 gezeigt sind können mehrere Temperaturfühler in dem Beleuchtungsfeld 10 verwendet werden. Diese werden bevorzugt in der Nähe der Leuchtdioden bzw. der Leuchtdioden-Gruppen 105, 107, 109, 111 angeordnet.

Die in der Figur 3 gezeigten Komponenten des Beleuchtungsmoduls 15 können als ein Modul mit entsprechenden externen Anschlüssen (nicht gezeigt) ausgebildet sein, so dass mehrere Beleuchtungsmodule auf einfache Weise zu einem großflächigen Beleuchtungsfeld 10 verbunden werden können.

Die in der Figur 3 gezeigte Anordnung kann auch derart abgewandelt werden, dass die LEDs 105, 107, 109, 111 auf einem Kühlkörper (nicht gezeigt) angeordnet sind. Die Dicke des Kühlkörper hängt dabei von der gewünschten Wärmeabfuhr weg von den LEDs 105, 107, 109, 111 ab. Gemäß dieser Ausführungsform ist das Beleuchtungsmodul 15 derart in der Vorrichtung zum Prüfen von Solarzellen angeordnet, dass die LEDs 105, 107, 109, 111 das Solarmodul 20 von unten bestrahlen. Ferner ist anstelle der Ventilatoren 125, 130 mindestens ein Lüfter (nicht gezeigt) vorgesehen, der von den LEDs 105, 107, 109, 111 erzeugte Wärme aus der Vorrichtung zum Prüfen von Solarzellen abführt bzw. absaugt. Der mindestens eine Lüfter kann unterhalb des Kühlkörpers angeordnet sein. Zwischen den einzelnen LEDs 105, 107, 109, 111 (vorzugsweise an Mittelpunkten bzw. Zentren der in Figur 2 gezeigten gleichseitigen Dreiecken oder unterhalb bzw. an jeder LED) können dazu Öffnungen (beispielsweise in einer Leiterplatte und/oder dem Kühlkörper) vorgesehen sein, durch welche mit Hilfe des mindestens einen Lüfters von den LEDs 105, 107, 109, 111 erzeugte Wärme abgeführt bzw. abgesaugt werden kann. Somit kann von den LEDs 105, 107, 109, 111 erzeugte Wärme nach unten abgeführt werden. Die Drehzahl des mindestens einen Lüfters ist steuerbar, so dass eine gewünschte Temperatur an den LEDs 105, 107, 109, 111 erreicht werden kann. Dazu kann jedes Beleuchtungsmodul 15 eine eigene Steuerungselektronik aufweisen. Das Absaugen der erwärmten Luft aus dem Raum zwischen den LEDs 105, 107, 109, 111 und dem Solarmodul 20 mit Hilfe des mindestens einen Lüfters ist auch bei der in der Figur 1 gezeigten Anordnung möglich.

Durch Änderung der Sperrschichttemperatur einer LED ändert sich das von ihr emittierte Spektrum. Die Änderung der Sperrschichttemperatur hängt dabei von der Änderung des der LED zugeführten Stroms und der Umgebungstemperatur der LED ab. Um eine im wesentlichen homogen verteilte Abgabe von Strahlungsleistung über das Beleuchtungsfeld 10 zu ermöglichen, sollen in den Beleuchtungsmodulen 15 des Beleuchtungsfelds 10 im wesentlichen die gleiche Umgebungstemperaturen existieren. Aufgrund der Nähe zu benachbarten LEDs werden aber in der Mitte des Beleuchtungsfelds 10 bzw. zwischen mehreren Beleuchtungsmodulen 15 angeordnete Beleuchtungsmodule 15 stärker als am Rande des Beleuchtungsfelds 10 angeordnete Beleuchtungsmodule 15 erwärmt. Aus diesem Grund sind die Drehzahlen der Lüfter jedes Beleuchtungsmoduls 15 individuell steuerbar, so dass zentral in dem Beleuchtungsfeld 10 angeordnete Beleuchtungsmodule 15 stärker als am Rande des Beleuchtungsfelds 10 angeordnete Beleuchtungsmodule 15 gekühlt werden können. Insbesondere kann eine Steuerungsvorrichtung vorgesehen sein, welche die Drehzahlen der Lüfter jedes Beleuchtungsmoduls 15 so steuert, dass in diesen im wesentlichen die gleich Temperatur existiert.

Denkbar ist aber auch, dass die Lüfter der jeweiligen Beleuchtungsmodule 15 nicht individuell steuerbar ausgebildet sind und nur mit einer vorbestimmten Drehzahl betrieben werden. Dabei können alle Lüfter mit der selben vorbestimmten Drehzahl betrieben werden. Es ist auch denkbar, dass die vorbestimmten Drehzahlen der jeweiligen Lüfter vor einer ersten Inbetriebnahme der Vorrichtung zum Prüfen von Solarzellen derart bestimmt werden, dass die Temperaturen in den Beleuchtungsmodulen 15 bei einem normalen Betrieb der Vorrichtung zum Prüfen von Solarzellen gleich sind. In diesem Fall kann auf die in der Figur 3 gezeigten Temperaturfühler 115, 120 verzichtet werden.

Figur 4 zeigt schematisch ein Ausführungsbeispiel eines erweiterten Beleuchtungsfeldes 140. Dabei entsprechen die gepunkteten Beleuchtungsmodule 145 dem in der Figur 1 gezeigten Beleuchtungsfeld 10. Die gestrichelten Beleuchtungsmodule 150 stellen Erweiterungsmodule dar.

So kann, falls ein größeres Solarmodul geprüft werden soll, das Beleuchtungsfeld auf einfache Weise erweitert werden, ohne dass eine Veränderung des Abstands zwischen dem Beleuchtungsfeld und dem Solarmodul notwendig ist.

Die einzelnen Beleuchtungsmodule 145, 150 weisen Standardanschlüsse (nicht gezeigt) auf, welche mit Standardverbindungskabeln (nicht gezeigt) mit der in Figur 1 gezeigten Messeinheit 30 verbunden werden können, so dass durch einfaches Verbinden der erweiterten Beleuchtungsmodule 150 mit der Messeinheit 30 in dem Beleuchtungsfeld 140 angeordnete Leuchtdioden gesteuert werden können.

## Patentansprüche

1. Vorrichtung zum Prüfen von Solarzellen mit
- einem Beleuchtungsfeld (10) mit Festkörperbeleuchtungsmitteln (80), welches dazu eingerichtet ist, Strahlung abzugeben,
- Anschlussmitteln (47), welche dazu eingerichtet sind, einen elektrischen Kontakt mit der mindestens eine Solarzelle (20) herzustellen,
- einer Messeinheit (30), welche dazu eingerichtet ist, eine an den Anschlussmitteln anliegende Spannung und/oder einen durch die Anschlussmittel fließenden Strom zu messen und
- einer Messvorrichtung (55), welche dazu eingerichtet ist, mindestens eine von der von dem Beleuchtungsfeld (10) abgegebenen Strahlung abhängige Messgröße zu bestimmen, **gekennzeichnet durch**
- eine Aufnahmevorrichtung, welche dazu eingerichtet ist, mindestens eine Solarzelle (20) derart an einer vorbestimmten Position und/oder in einer vorbestimmten Lage hinsichtlich des Beleuchtungsfelds (10) aufzunehmen, dass das Beleuchtungsfeld (10) die Strahlung zumindest teilweise an die mindestens eine Solarzelle (20) abgibt, und dass die aktive Oberfläche der mindestens einen Solarzelle (20) auf einer Messebene (50) liegt, sowie dadurch, dass
- die Messvorrichtung (55) dazu eingerichtet ist, entlang der Messebene (50) bewegt zu werden und die Messgröße an einer bestimmten Stelle auf der Messebene (50) zu bestimmen, und dass
- die Festkörperbeleuchtungsmittel (80) derart in dem Beleuchtungsfeld (10) angeordnet sind, dass sie auf Eckpunkten eines hexagonalen Netzes (82) liegen, wobei das hexagonale Netz (82) eine Mehrzahl von regelmäßigen Sechsecken (S) aufweist und ein Festkörperbeleuchtungsmittel (80) auf dem jeweiligen Mittelpunkt (M) der regelmäßigen Sechsecke (S) angeordnet ist.

2. Vorrichtung nach Anspruch 1, bei der das Beleuchtungsfeld (10) dazu eingerichtet ist, im wesentlichen monochromatisches Licht abzugeben.

3. Vorrichtung nach einem der vorhergehenden Ansprüche, bei der das Beleuchtungsfeld (10) dazu eingerichtet ist, die Strahlung zumindest bereichsweise im wesentlichen homogen verteilt abzugeben.

4. Vorrichtung nach einem der vorhergehenden Ansprüche, bei der die Festkörperbeleuchtungsmittel (80) linsenförmige Strahleröffnungen aufweisen.

5. Vorrichtung nach einem der vorhergehenden Ansprüche, bei der das Beleuchtungsfeld (10) modular ausgebildet ist und Module des Beleuchtungsfelds (15) lösbar in der Vorrichtung zum Prüfen von Solarzellen befestigt sind.

6. Vorrichtung nach einem der vorhergehenden Ansprüche, wobei die Messgröße mindestens eine der Größen Strahlungsleistung, spezifische Ausstrahlung, Lichtstärke, oder Leuchtdichte ist.

7. Vorrichtung nach einem der vorhergehenden Ansprüche, ferner mit
- einer Auswertungseinheit (60), welche dazu eingerichtet ist, eine örtliche Verteilung von in der Messebene (50) gemessener Messwerte der Messgröße zu bestimmen.

8. Vorrichtung nach Anspruch 7, ferner mit
- einer Vorrichtung (70) zum Steuern der von den Festkörperbeleuchtungsmitteln abgegebenen Strahlung in Abhängigkeit von der örtlichen Verteilung.

9. Vorrichtung nach Anspruch 8, bei der die Vorrichtung (70) zum Steuern der von den Festkörperbeleuchtungsmitteln abgegebenen Strahlung dazu eingerichtet ist, die Festkörperbeleuchtungsmittel (80) derart zu steuern, dass die Strahlung in der Messebene (50) zumindest bereichsweise im wesentlichen homogen verteilt ist.

10. Vorrichtung nach einem der vorhergehenden Ansprüche, ferner mit
- einer Vorrichtung (70) zum Steuern der von den Festkörperbeleuchtungsmitteln abgegebenen Strahlung in Abhängigkeit von der Messgröße.

11. Vorrichtung nach Anspruch 10, wobei die Vorrichtung (70) zum Steuern der von den Festkörperbeleuchtungsmitteln abgegebenen Strahlung dazu eingerichtet ist, die Festkörperbeleuchtungsmittel (80) individuell und/oder gruppenweise zu steuern.

12. Vorrichtung nach einem der vorhergehenden Ansprüche, bei der die Festkörperbeleuchtungsmittel (80) auf mindestens einem Kühlkörper angebracht sind.

13. Vorrichtung nach einem der vorhergehenden Ansprüche, ferner mit
- mindestens einem Lüfter zum Abführen einer von den Festkörperbeleuchtungsmitteln erzeugten Wärme, wobei die Drehzahl des mindestens einen Lüfters derart steuerbar ist, dass die Temperatur an den Festkörperbeleuchtungsmitteln einen gewünschten Wert aufweist.

## Claims

1. A device for testing solar cells, comprising
- an illumination area (10) with solid-state lighting means (80), which is adapted to emit radiation,
- connection means (47) which are adapted to make an electrical contact with the at least one solar cell (20),
- a measuring unit (30) which is adapted to measure a voltage applied to the connection means and/or a current flowing through the connection means, and
- a measuring device (55) which is adapted to determine at least one measured quantity which is dependent on the radiation emitted from the illumination area (10),
**characterised in that**
- a supporting device is adapted to support at least one solar cell (20) in a predetermined position and/or in a predetermined orientation in respect of the illumination area (10) so that the illumination area (10) emits the radiation at least partially to the at least one solar cell (20) and the active surface of the at least one solar cell (20) lies in one measuring plane, as well as **in that**
- the measuring device (55) is adapted to be moved along the measuring plane (50) and to determine the measured quantity at a certain point in the measuring plane (50), and
- the solid-state lighting means (80) are arranged in the illumination area (10) in such a manner that they are located on corner points of a hexagonal net (82), wherein the hexagonal net (82) comprises a plurality of equilateral hexagons (S) and one solid-state lighting means (80) is arranged in the respective centre (M) of the equilateral hexagon (S).

2. The device according to Claim 1, wherein the illumination area (10) is adapted to emit essentially monochromatic light.

3. The device according to one of the previous claims, wherein the illumination area (10) is adapted to emit the radiation at least in portions essentially homogeneously distributed.

4. The device according to one of the previous claims, wherein the solid-state lighting means (80) comprise lense-shaped emitter openings.

5. The device according to one of the previous claims, wherein the illumination area (10) is of modular configuration, and the modules of the illumination area (10) are releasably attached in the device for testing solar cells.

6. The device according to one of the previous claims, wherein the measured quantity is at least one of radiation power, specific radiation, luminous intensity and luminance.

7. The device according to one of the previous claims, further comprising
- an evaluation unit (60) which is adapted to determine a local distribution of the measured values of the measured quantity obtained in the measuring plane (50).

8. The device according to Claim 7, further comprising
- a device (70) for controlling the radiation emitted from the solid-state lighting means depending on the local distribution.

9. The device according to Claim 8, wherein the device (70) for controlling the radiation emitted from the solid-state lighting means is adapted to control the solid-state lighting means (80) in such a manner that the radiation in the measuring plane (50) at least in portions is essentially homogeneously distributed.

10. The device according to one of the previous claims, further comprising
- a device (70) for controlling the radiation emitted from the solid-state lighting means depending on the measured quantity.

11. The device according to Claim 10, wherein the device (70) for controlling the radiation emitted from the solid-state lighting means is adapted to control the solid-state lighting means (80) individually and/or in groups.

12. The device according to one of the previous claims, wherein the solid-state lighting means (80) are mounted on at least one heat sink.

13. The device according to one of the previous claims, further comprising
- at least one fan for dissipating the heat generated by the solid-state lighting means, wherein the speed of the at least one fan may be controlled in such a manner that the temperature at the solid-state lighting means exhibits a desired value.

## Revendications

1. Dispositif pour vérifier des piles solaires, comprenant
- un champ d'éclairage (10) équipé de moyens d'éclairage à source de lumière solide (80) et conçu pour émettre un rayonnement,
- des moyens de connexion (47) qui sont conçus pour établir un contact électrique avec ladite au moins une pile solaire (20),
- une unité de mesure (30) qui est conçue pour mesurer une tension présente aux moyens de connexion et/ou un courant circulant à travers les moyens de connexion et
- un dispositif de mesure (55) qui est conçu pour déterminer au moins une grandeur à mesurer dépendante du rayonnement émis par le champ d'éclairage (10), **caractérisé par**
- un dispositif de réception qui est conçu pour recevoir au moins une pile solaire (20) dans une position prédéterminée et/ou dans une position prédéfinie par rapport au champ d'éclairage (10) de manière telle que le champ d'éclairage (10) émet le rayonnement au moins partiellement vers ladite au moins une pile solaire (20) et que la surface active de ladite au moins une pile solaire (20) se situe sur un plan de mesure (50), et **caractérisé en ce que**
- le dispositif de mesure (55) est conçu pour être déplacé le long du plan de mesure (50) et pour déterminer la grandeur à mesurer en un point déterminé sur le plan de mesure (50), et **en ce que**
- les moyens d'éclairage à source de lumière solide (80) sont disposés dans le champ d'éclairage (10) de manière telle qu'ils sont placés à des points d'angle d'un réseau hexagonal (82), ce réseau hexagonal (82) présentant une pluralité d'hexagones réguliers (S) et un moyen d'éclairage à source de lumière solide (80) étant disposé au centre (M) de ces hexagones réguliers (S).

2. Dispositif selon la revendication 1, dans le cadre duquel le champ d'éclairage (10) est conçu pour émettre de la lumière pour l'essentiel monochromatique.

3. Dispositif selon l'une des revendications précédentes, dans le cadre duquel le champ d'éclairage (10) est conçu pour émettre au moins partiellement le rayonnement réparti de manière sensiblement homogène.

4. Dispositif selon l'une des revendications précédentes, dans le cadre duquel les moyens d'éclairage à source de lumière solide (80) présentent des ouvertures de rayonnement de forme lenticulaire.

5. Dispositif selon l'une des revendications précédentes, dans le cadre duquel le champ d'éclairage (10) est réalisé de manière modulaire et les modules du champ d'éclairage (15) sont fixés de manière amovible dans le dispositif pour vérifier des piles solaires.

6. Dispositif selon l'une des revendications précédentes, la grandeur à mesurer consistant en au moins une des grandeurs suivantes : la puissance de rayonnement, le rayonnement spécifique, l'intensité lumineuse ou la luminance.

7. Dispositif selon l'une des revendications précédentes, comprenant par ailleurs
- une unité d'évaluation (60) qui est conçue pour déterminer une distribution locale des valeurs mesurées dans le plan de mesure (50) pour la grandeur à mesurer.

8. Dispositif selon la revendication 7, comprenant par ailleurs
- un dispositif (70) pour commander le rayonnement émis par les moyens d'éclairage à source de lumière solide en fonction de la distribution locale.

9. Dispositif selon la revendication 8, dans le cadre duquel le dispositif (70) servant à commander le rayonnement émis par les moyens d'éclairage à source de lumière solide est conçu pour commander les moyens d'éclairage à source de lumière solide (80) de manière telle que le rayonnement est réparti au moins partiellement de manière sensiblement homogène dans le plan de mesure (50).

10. Dispositif selon l'une des revendications précédentes, comprenant par ailleurs
- un dispositif (70) pour commander le rayonnement émis par les moyens d'éclairage à source de lumière solide en fonction de la grandeur à mesurer.

11. Dispositif selon la revendication 10, le dispositif (70) pour commander le rayonnement émis par les moyens d'éclairage à source de lumière solide étant conçu pour commander de manière individuelle et/ou de manière groupée les moyens d'éclairage à source de lumière solide (80).

12. Dispositif selon l'une des revendications précédentes, dans le cadre duquel les moyens d'éclairage à source de lumière solide (80) sont montés sur au moins un radiateur.

13. Dispositif selon l'une des revendications précédentes, comprenant par ailleurs
- au moins un ventilateur pour évacuer la chaleur produite par les moyens d'éclairage à source de lumière solide, la vitesse de rotation dudit au moins un ventilateur pouvant être commandée de manière telle que la température aux moyens d'éclairage à source de lumière solide présente une valeur souhaitée.
